Europäisches Patentamt

European Patent Office

Office européen des brevets

(19)

(11) Veröffentlichungsnummer: **0 072 398**
**B1**

(12) **EUROPÄISCHE PATENTSCHRIFT**

(45) Veröffentlichungstag der Patentschrift:
21.08.85

(21) Anmeldenummer: 82104861.8

(22) Anmeldetag: 03.06.82

(51) Int. Cl.⁴: **F 16 F 1/12,** G 05 D 16/06

(54) Einrichtung zum Einstellen der Kraftwirklinie einer Feder.

(30) Priorität: 17.08.81 DE 3132316

(43) Veröffentlichungstag der Anmeldung:
23.02.83 Patentblatt 83/8

(45) Bekanntmachung des Hinweises auf die Patenterteilung:
21.08.85 Patentblatt 85/34

(84) Benannte Vertragsstaaten:
AT CH DE FR GB IT LI NL SE

(56) Entgegenhaltungen:
DE - B - 1 021 653
DE - B - 1 212 789
DE - B - 1 222 798
FR - A - 365 761
GB - A - 1 435 511

(73) Patentinhaber: **WABCO Westinghouse
Fahrzeugbremsen GmbH, Am Lindener
Hafen 21 Postfach 91 12 80, D-3000 Hannover 91 (DE)**

(72) Erfinder: **Menze, Wilfried, Goebelbastei 21,
D-3257 Springe 1 (DE)**
Erfinder: **König, Heinz-Werner, Luisenstrasse 6,
D-3013 Barsinghausen 8 (DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

## Beschreibung

Die Erfindung betrifft eine Einrichtung zum Einstellen der Kraftwirklinie einer Feder gemäß dem Oberbegriff des Patentanspruchs 1.

Bei Geräten, die zur Bestimmung einer Steuer- bzw. Regelgröße eine Feder aufweisen, wie es z. B. bei Druckreglern der Fall ist, ist es erforderlich, die Federspannung genau einstellen zu können. ·

Dies erfolgt bei einem aus der FR-A-365 761 bekannten Druckregler mittels eines Gewindestiftes, welcher in einem mit Gewinde versehenen Führungselement im Reglergehäuse gehaltert wird und auf einen auf dem einen Ende einer Regelfeder aufliegenden Federteller einwirkt. Die Regelfeder liegt mit ihrem anderen Ende auf einem im Reglergehäuse angeordneten Membrankolben auf, welcher eine Druckmittelkammer begrenzt. Über einen mit dem Membrankolben verbundenen Stößel wird in Abhängigkeit von der Kolbenbewegung ein den Druck steuerndes Ventil betätigt. Der sich in der Druckmittelkammer aufbauende Druck verschiebt den Kolben gegen die Kraft der Regelfeder, wodurch bei Erreichen der von der Regelfeder bestimmten Druckhöhe das mit dem Kolben über den Stößel in Wirkverbindung stehende Ventil derart betätigt wird, daß die Druckmittelzufuhr zum Verbraucher unterbrochen wird. Fällt der Druck im Verbraucher und somit auch in der Druckmittelkammer des Druckreglers ab, so daß die Kraft der Regelfeder größer wird als die vom Druckmittel auf den Membrankolben ausgeübte Kraft, so wird das Ventil wieder in eine Stellung gebracht, in welcher der Druckmittelerzeuger mit dem Druckmittelverbraucher verbunden ist.

Bedingt durch Fertigungstoleranzen bei Feder, Federtellern und Führungselement kann sich die Kraftwirklinie der Feder verändern, was zu unerwünschten und unter Umständen unzulässigen Veränderungen der Steuer- bzw. Regelcharakteristik des Druckreglers führen kann.

Der Erfindung liegt deshalb die Aufgabe zugrunde, eine Einrichtung der eingangs genannten Art zu schaffen, mittels welcher auf einfache Art und Weise die Kraftwirklinie einer Feder einstellbar ist.

Diese Aufgabe wird mit der im Patentanspruch 1 angegebenen Erfindung gelöst.

Vorteilhafte Weiterbildungen und Ausgestaltungen der Erfindung werden in den Unteransprüchen aufgezeigt.

Die Erfindung bietet den Vorteil, mit einfachen Mitteln die Kraftwirklinie einer Feder genau einstellen zu können.

Da die Einstellung der Kraftwirklinie der Feder über ein mit Gewinde versehenes, aus dem Gerät herausragendes Einstellelement oder über einen mit Gewinde versehenen Stift erfolgt, ist eine Demontage des Gerätes zu Einstellzwecken nicht erforderlich.

Anhand der Zeichnungen werden zwei Ausführungsbeispiele der Erfindung nachstehend näher erläutert. Es zeigt

Fig. 1 einen Ausschnitt eines Druckreglers mit Regelfeder und Einstellmechanismus, wobei der Stift zum Einstellen der Vorspannung der Regelfeder eine exzentrische Spitze aufweist und

Fig. 2 einen Ausschnitt eines Druckreglers, dessen Stift zum Einstellen der Vorspannung der Regelfeder exzentrisch in einem Einstellelement gehaltert ist.

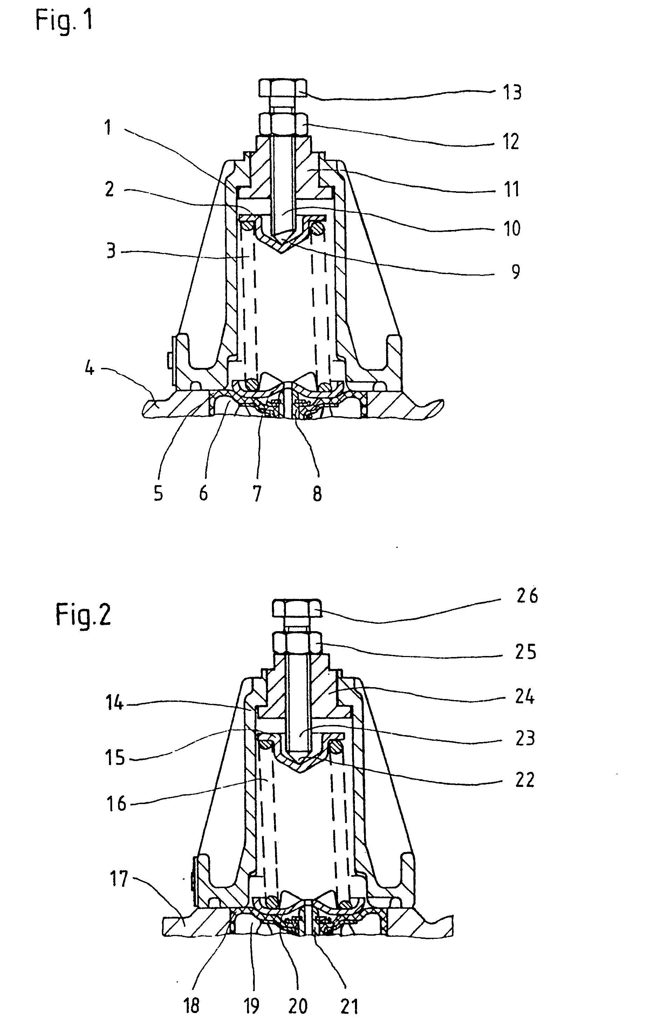

In Fig. 1 ist ein Ausschnitt eines aus zwei Gehäuseteilen 1 und 4 bestehenden Druckreglers dargestellt. Im unteren Gehäuseteil 4 ist eine Druckmittelkammer 6 vorgesehen, welche über einen nicht gezeigten Druckmittelanschluß mit einer Druckmittelquelle in Verbindung steht. Die Druckmittelkammer 6 wird von einer als Kolben dienenden Membran 5 begrenzt, welche einen zentrisch durch die Membran 5 geführten und mit der Membran 5 verbundenen Stößel 8 zur Betätigung von hier nicht dargestellten Steuergliedern aufweist. Auf der zum ersten Gehäuseteil 1 hinweisenden Seite der Membran 5 ist ein erster Federteller 7 angeordnet, der so ausgebildet ist, daß er sowohl auf dem durch die Membran 5 hindurchgeführten Teil des Stößels 8 als auch auf der Membran 5 aufliegt. Der erste Federteller 7 dient als Lager für eine als Druckfeder ausgebildete schraubenförmige Regelfeder 3. Ein zweiter Federteller 2 liegt auf dem zum oberen Gehäuseteil 1 weisenden freien Ende der Regelfeder 3 auf. Der zweite Federteller 2 ist in etwa trichterförmig ausgebildet, so daß er ein Stück in die Regelfeder 3 hineinragt und an deren Innenseite anliegt. In einer kreisförmigen Ausnehmung des oberen Gehäuseteils 1 ist ein Einstellelement 11 angeordnet, in welchem ein mit einem Kopf 13 versehener Stift 10 gehalten wird. Der Stift 10 weist eine exzentrische Spitze 9 auf, die im Zentrum des trichterförmigen Federtellers 2 aufliegt. Mittels einer Kontermutter 12 ist der Stift 10 gegen das Einstellelement 11 verspannbar. Das Einstellelement 11 ist in der kreisförmigen Ausnehmung des oberen Gehäuseteils 1 verdrehbar gelagert.

Soll die Vorspannung der Regelfeder 3 eingestellt werden, so wird die Kontermutter 12 gelöst und der Stift 10 zwecks Erhöhen der Vorspannung der Regelfeder 3 weiter in Richtung auf den Federteller 2 zu in das Einstellelement 11 hineingedreht oder zwecks Verringerung der Vorspannung der Regelfeder 3 in entgegengesetzter Richtung aus dem Einstellelement 11 herausgedreht. Um die Kraftwirklinie der Regelfeder 3 zu verändern, ist lediglich das Einstellelement 11 mit dem gegen das Einstellelement 11 wieder verspannten Stift 10 so weit zu verdrehen, bis die Spitze 9 des Stiftes 10 die Regelfeder 3 so weit um ihre Längsachse verschwenkt hat, daß die gewünschte Kraftwirklinie der Regelfeder 3 zum dem Federteller 2 gegenüberliegenden Auflager der Regelfeder 3 (Federteller 7) erreicht ist.

Die Fig. 2 zeigt einen Ausschnitt eines aus zwei Gehäuseteilen 14 und 17 bestehenden Druckreglers. Im unteren Gehäuseteil 17 ist eine Druckmittelkammer 19 vorgesehen, welche über einen nicht gezeigten Druckmittelanschluß mit einer Druckmittelquelle in Verbindung steht. Die Druckmittelkammer 19 wird von einer als Kolben dienenden Membran 18 begrenzt, welche einen zentrisch durch die Membran 18 geführten und mit der Membran 18 verbundenen Stößel 21 zur Betätigung von hier nicht dargestellten Steuergliedern aufweist. Auf der zum ersten Gehäuseteil 14 hinweisenden Seite der Membran 18 ist ein erster Federteller 20 angeordnet, der so ausgebildet ist, daß er sowohl auf dem durch die Membran 18 hindurchgeführten Teil des Stößels 21 als auch auf der Membran 18 aufliegt. Der erste Federteller 20 dient als Lager für eine als Druckfeder ausgebildete Regelfeder 16. Ein zweiter Federteller 15 liegt auf dem zum oberen Gehäuseteil 14 weisenden freien Ende der Regelfeder 16 auf. Der zweite Federteller 15 ist in etwa trichterförmig ausgebildet, so daß er ein Stück in die Regelfeder 16 hineinragt und an deren Innenseite anliegt. In einer kreisförmigen Ausnehmung des oberen Gehäuseteils 14 ist ein Einstellelement 24 angeordnet, in welchem ein mit einem Kopf 26 versehener Stift 23 exzentrisch geführt wird. Der Stift 23 weist eine Spitze 22 auf, die im Zentrum des trichterförmigen Federtellers 15 aufliegt. Mittels einer Kontermutter 25 ist der Stift 23 gegen das Einstellelement 24 verspannt. Das Einstellelement 24 ist in der kreisförmigen Ausnehmung des oberen Gehäuseteils 14 verdrehbar gelagert.

Der Einstellvorgang der Kraftwirklinie der Regelfeder 16 erfolgt durch Verdrehen des Einstellelementes 24, wodurch die Regelfeder 16 um ihre Längsachse verschwenkt wird.

Es ist natürlich auch möglich, den Federteller eben auszubilden, so daß durch Verdrehen des exzentrisch ausgebildeten Anschlages der Anlagepunkt des Federtellers am Anschlag verändert wird, wodurch sich auch eine Veränderung der Kraftwirklinie der Regelfeder ergibt.

Es ist auch denkbar, eine zum Federteller exzentrische Auflage des Stiftes dadurch zu erreichen, daß in der dem Federteller zugewandten Stirnseite des Stiftes ein Stift exzentrisch angeordnet ist.

Die Erfindung läßt sich selbstverständlich in allen Einrichtungen verwenden, die mit einer schraubenförmigen Feder ausgerüstet sind.

**Patentansprüche**

1. Einrichtung zum Einstellen der Kraftwirklinie einer schraubenförmigen Feder, insbesondere in einem Druckregler, mit folgenden Merkmalen:

a) zur Abstützung eines der Enden der Feder ist ein Federteller (2, 15) vorgesehen;

b) zwischen dem Federteller (2, 15) und einem die Feder aufnehmendem Gehäuse ist ein stiftförmiger Anschlag (10, 23) für den Federteller (2, 15) vorgesehen;

c) der Anschlag (10, 23) ist veränderbar im Gehäuse gelagert;

dadurch gekennzeichnet, daß das an dem Federteller (2, 15) anliegende Ende des Anschlages (10, 23) und die Lagerung des Anschlages im Gehäuse so ausgebildet sind, daß bei einer relativ zum Gehäuse erfolgenden Drehung und/oder Bewegung des Anschlages (10, 23) der Anlagepunkt des Federtellers (2, 15) am Anschlag (10, 23) oder die Lage des Federtellers (2, 15) veränderbar ist und daß das dem Anschlag (10, 23) abgewandte Ende der Feder so gelagert ist, daß bei einer Drehung und/oder Bewegung des Anschlages (10, 23) eine Verschwenkbewegung der Längsachse der Feder erfolgt.

2. Einrichtung nach Anspruch 1, dadurch gekennzeichnet, daß als Anschlag ein im Gehäuse drehbar angeordneter Stift (10) vorgesehen ist, dessen am Federteller (2) anliegendes Ende exzentrisch ausgebildet ist.

3. Einrichtung nach Anspruch 2, dadurch gekennzeichnet, daß der Stift (10) koaxial zur Feder (3) angeordnet ist.

4. Einrichtung nach Anspruch 1, dadurch gekennzeichnet, daß der Anschlag (10, 23) ein drehbar im Gehäuse (1, 14) angeordnetes Einstellelement (11, 24) enthält.

5. Einrichtung nach Anspruch 4, dadurch gekennzeichnet, daß in einer außermittigen Bohrung des Einstellelementes ein Stift drehbar angeordnet ist, dessen am Federteller anliegendes Ende exzentrisch ausgebildet ist.

6. Einrichtung nach Anspruch 4, dadurch gekennzeichnet, daß in einer außermittigen Bohrung des Einstellelementes (24) ein Stift (23) drehbar angeordnet ist, dessen am Federteller (15) anliegendes Ende zentrisch ausgebildet ist.

7. Einrichtung nach wenigstens einem der vorhergehenden Ansprüche, dadurch gekennzeichnet, daß der als Anschlag dienende Stift zwecks Veränderung der Vorspannung der Feder in axialer Richtung verstellbar ist.

8. Einrichtung nach Anspruch 1, bei welchem die Lage des Federtellers veränderbar ist, dadurch gekennzeichnet, daß der Federteller (2, 15) und/oder der Anschlag (10, 23) so ausgebildet sind, daß der Anschlag (10, 23) auch bei einer Drehung oder Bewegung an einem festen Punkt des Federtellers (2, 15) anliegt.

9. Druckregler mit einer Einrichtung nach wenigstens einem der vorhergehenden Ansprüche, gekennzeichnet durch die folgenden Merkmale:

a) in einem Gehäuse mit wenigstens einem Druckmitteleingang und einem Druckmittelausgang ist eine Druckmittelkammer vorgesehen, die von einer als Kolben dienenden Membran (5) begrenzt wird;

b) die Membran (5) ist mit einem Stößel (8) zur Betätigung von Drucksteuergliedern verbunden;

c) auf der der Druckmittelkammer abgewandten Seite der Membran (5) liegt die Feder (3) auf;

d) auf dem der Membran (5) abgewandten Ende der Feder (3) liegt der Federteller (2) auf.

10. Einrichtung nach Anspruch 1, dadurch gekennzeichnet, daß der Anschlag (10, 23) und/oder das Einstellelement (11, 24) so ausgebildet sind, daß sie von außen einstellbar sind.

## Claims

1. Device for adjusting the force action line of a helical spring, especially in a pressure regulator, having the following features:

a) a spring plate (2, 15) is provided to support one end of the spring;
b) a pin-shaped stop (10, 23) for the spring plate (2, 15) is provided between the spring plate (2, 15) and a housing containing the spring;
c) the stop (10, 23) is mounted in the housing in such a manner that its position can be altered;

characterised in that the end of the stop (10, 23) in contact with the spring plate (2, 15) and the mounting of the stop in the housing are such that, as a result of a rotation of the stop (10, 23) and/or its movement relative to the housing, the point on the spring plate (2, 15) in contact with the stop (10, 23) or the position of the spring plate (2, 15) can be altered, and that the end of the spring remote from the stop (10, 23) is mounted in such a manner that a change in direction of the longitudinal axis of the spring is produced in response to the rotation and/or movement of the stop (10, 23).

2. Device according to claim 1, characterised in that a pin (10) rotatably arranged in the housing is provided as the stop, the end of the pin in contact with the spring plate (2) being formed eccentrically.

3. Device according to claim 2, characterised in that the pin (10) as arranged coaxially with the spring (3).

4. Device according to claim 1, characterised in that the stop (10, 23) includes an adjusting member (11, 24) that is rotatably arranged in the housing (1, 14).

5. Device according to claim 4, characterised in that a pin is rotatably arranged in an off-centre bore in the adjusting member, the end of the pin in contact with the spring plate being formed eccentrically.

6. Device according to claim 4, characterised in that a pin (23) is rotatably arranged in an off-centre bore in the adjusting member (24), the end of the pin in contact with the spring plate (15) being formed concentrically.

7. Device according to at least one of the preceding claims, characterised in that the pin acting as the stop can be adjusted in an axial direction in order to alter the bias of the spring.

8. Device according to claim 1, in which the position of the spring plate can be altered, characterised in that the spring plate (2, 15) and/or the stop (10, 23) are so constructed that the stop (10, 23) remains in contact with a fixed point on the spring plate (2, 15) even with the rotation or movement of the stop.

9. Pressure regulator having a device according to at least on of the preceding claims, characterised by the following features:

a) a pressure-medium chamber is provided in a housing having at least one pressure-medium inlet and one pressure-medium outlet, the chamber being defined by a diaphragm (5) acting as a piston;
b) the diaphragm (5) is connected to a tappet (8) for actuating pressure control members;
c) the spring (3) rests on the side of the diaphragm (5) remote from the pressure-medium chamber;
d) the spring plate (2) rests on the end of the spring (3) remote from the diaphragm (5).

10. Device according to claim 1, characterised in that the stop (10, 23) and/or the adjusting member (11, 24) are so constructed that they can be adjusted from the outside.

## Revendications

1. Dispositif pour régler la ligne d'action de la force d'un ressort hélicoïdal, en particulier dans un régulateur de pression, présentant les caractéristiques suivantes:

a) comme appui de l'une des extrémités du ressort est prévue une cuvette de ressort (2, 15);
b) entre la cuvette de ressort (2, 15) et un carter qui loge le ressort est prévue pour la cuvette de ressort (2, 15) une butée en forme de broche (10, 23);
c) on peut modifier la portée de la butée (10, 23) dans le carter;

caractérisé en ce que l'extrémité, qui s'appuie contre la cuvette de ressort (2, 15), de la butée (10, 23) et la portée de cette butée dans le carter sont conçues de façon qu'en effectuant une rotation et/ou un déplacement de la butée (10, 23) par rapport au carter, on peut modifier le point l'appui de la cuvette de ressort (2, 15) contre le butée (10, 23) ou la position de la cuvette de ressort (2, 15); et en ce que la portée de l'extrémité, côté opposé à la butée (10, 23), ru ressort est telle'qu'en cas de rotation et/ou de déplacement de la butée (10, 23), il en résulte un mouvement de pivotement de l'axe longitudinal du ressort.

2. Dispositif selon la revendication 1, caractérisé en ce qu'il est prévu comme butée une broche (10) disposée, avec possibilité de rotation, dans le carter et dont l'extrémité qui s'appuie contre la cuvette de ressort (2) a une forme excentrée.

3. Dispositif selon la revendication 2, caractérisé en ce que la broche (10) est disposée coaxialement par rapport au ressort (3).

4. Dispositif selon la revendication 1, caractérisé en ce que la butée (10, 23) contient un élément de réglage (11, 24) disposé, avec, possibilité de rotation, dans le carter (1, 14).

5. Dispositif selon la revendication 4, caractérisé en ce que dans un alésage excentré de l'élément de réglage est disposée, avec possibilité de rotation, une broche dont l'extrémité qui s'appuie contre la cuvette de ressort a une forme excentrée.

6. Dispositif selon la revendication 4, caractérisé en ce que dans un alésage excentré de l'élément de réglage (24) est disposée, avec possibilité de rotation, une broche (23) dont l'extrémité qui s'appuie contre les cuvettes de ressort (15) a une forme centrée.

7. Dispositif selon au moins l'une des revendications précédentes, caractérisé en ce que, pour modifier la précontrainte du ressort, on peut déplacer en direction axiale la broche qui sert de butée.

8. Dispositif selon la revendication 1, dans lequel on peut modifier la position de la cuvette de ressort, caractérisé en ce que la cuvette de ressort (2, 15) et/ou la butée (10, 23) sont conçues de façon que la butée (10, 23) s'appuie contre un point fixe de la cuvette de ressort (2, 15), même en cas de rotation ou de déplacement.

9. Régulateur de pression comportant un dispositif selon au moins l'une des revendications Précédentes, caractérisé par les propriétés suivantes:

a) dans un carter présentant au moins une entrée de fluide sous pression et une sortie de fluide sous pression est prévue une chambre de fluide sous pression limitée par une membrane (5) servant de piston;

b) la membrane (5) est reliée à un coulisseau (8) pour la manoeuvre d'éléments de commande de la pression;

c) sur la face, côté opposé à la chambre du fluide sous pression, de la membrane (5) repose le ressort (3);

d) sur l'extrémité, côté opposé à la membrane (5), du ressort (3) respose la cuvette de ressort (2).

10. Dispositif selon la revendication 1, caractérisé en ce que la butée (10, 23) et/ou l'élément de réglage (11, 24) sont conçus de façon à être réglables de l'extérieur.

0 072 398

Fig. 1

Fig. 2

7